# EUROPÄISCHE PATENTSCHRIFT

(11) **EP 2 939 892 B1**
(45) Veröffentlichungstag und Bekanntmachung des Hinweises auf die Patenterteilung: **14.11.2018**
(21) Anmeldenummer: 15000274.9
(22) Anmeldetag: 29.01.2015
(51) Int. Cl.: B60T 17/22, B60T 13/66, B60T 13/68, B60T 13/26

(54) **Elektrische Feststellbremse für ein Fahrzeug**
Electric parking brake for a vehicle
Frein de stationnement électrique pour un véhicule

(30) Priorität: 28.04.2014 DE 102014006013
(43) Veröffentlichungstag der Anmeldung: 04.11.2015
(73) Patentinhaber: MAN Truck & Bus AG, 80995 München (DE)
(72) Erfinder: Ittlinger, Reinhard, 94363 Oberschneiding (DE)
(74) Vertreter: v. Bezold & Partner Patentanwälte - PartG mbB

(56) Entgegenhaltungen:
- EP-A1- 1 504 975
- EP-A1- 1 571 061
- EP-A1- 2 199 162
- WO-A2-92/11151
- WO-A2-03/029060
- DE-A1-102005 058 799
- DE-A1-102007 016 335
- DE-A1-102007 047 692
- DE-A1-102008 014 547
- DE-A1-102010 011 978

## Beschreibung

Die Erfindung betrifft eine elektrische Feststellbremsvorrichtung für ein Fahrzeug, insbesondere für ein Nutzfahrzeug.

Nutzfahrzeugbremsanlagen umfassen ein Betriebsbremssystem und ein Parkbremssystem, die zumeist unabhängig voneinander pneumatisch oder elektropneumatisch gesteuert werden. Parkbremssysteme, nachfolgend auch als Feststellbremse, Federspeicherfeststellbremse oder Feststellbremsvorrichtung bezeichnet, umfassen zumeist Federspeicherbremszylinder, die in ihrem entlüfteten Zustand das Fahrzeug bremsen, während die Parkbremse durch Belüften des Federspeicherbremszylinders gelöst werden kann.

Nutzfahrzeuge können ferner mit einem Not-Aus-Trennschalter ausgestattet sein. Der Not-Aus-Trennschalter ist typischerweise im Fahrerhaus angeordnet. Mit einem derartigen Not-Aus-Trennschalter können jegliche Spannungsversorger, z. B. eine oder mehrere Batterien und Generatoren, z. B. im Gefahrenfall, vom angeschlossenen Bordnetz abgetrennt werden.

Hierbei tritt das Problem auf, dass nach Betätigung des Not-Aus-Trennschalters oder auch allgemein bei Ausfall der Stromversorgung das Betätigen einer elektrischen Feststellbremse nicht mehr möglich ist, da kein elektrisches Ansteuersignal mehr übertragen werden kann.

Ferner ist zu vermeiden, dass das Parkbremssystem im Fehlerfall oder während der Fahrt unkontrolliert einfällt. Aufgrund gesetzlicher Anforderungen darf die Feststellbremse nicht selbstständig entgegen der Absicht des Fahrers einfallen.

Aus der Offenlegungsschrift EP 2 199 162 A1 ist ein Ansatz zur Lösung dieses Problems bekannt, wobei eine Feststellbremseinrichtung vorgeschlagen wird, die auf einer Verschaltung von drei elektrisch betätigbaren Magnetventilen basiert. Aus der WO 03/029060 A2 ist eine Bremsanlage für ein fahrerlos betreibbares Fahrzeug bekannt, mit einer mittels eines Betriebsbremsbedienelements manuell betätigbaren Betriebsbremseinrichtung, mit einer mittels eines Feststellbremsbedienelements manuell betätigbaren Feststellbremseinrichtung und mit einer Notbremseinrichtung, wobei zumindest die Radbremseinrichtungen der Räder einer Achse des Fahrzeugs Notbremsaktuatoren aufweisen, die durch das Auslösen eines Notbremsvorganges die zugeordneten Radbremseinrichtungen in den Bremszustand umschalten, und wobei der Notbremsvorgang wahlweise sowohl manuell mittels einer Notbremsbedieneinrichtung auslösbar ist, als auch selbsttätig mittels einer Überwachungseinrichtung auslösbar ist, wenn die Überwachungseinrichtung einen unzulässigen Betriebszustand des Fahrzeugs im fahrerlosen Betrieb festgestellt hat.

Aus der WO 92/11151 A2 ist eine Bremsvorrichtung für einen an ein Zugfahrzeug angekoppelten Anhänger bekannt, wobei das Zugfahrzeug Mittel zum Bereitstellen eines elektrischen Bremssteuersignals aufweist und wobei der Anhänger Fluidikmittel zum Betätigen von mechanischen Bremsen aufweist, insbesondere einen Elektromotor, welcher Mittel zum Unterdrucksetzen eines Druckspeichers antreibt, wobei der letztere einen Fluidiksteuerkreis speist, dadurch gekennzeichnet, dass der Fluidiksteuerkreis ein Druckbegrenzungsventil, ein Steuerventil sowie ein Sicherheitsventil umfasst, wobei die genannten Ventile einen Bremszylinder, der die Bremsen des Anhängers betätigt, steuern und wobei das elektrische Bremssteuersignal auf das Steuerventil wirkt.

Es ist eine Aufgabe der Erfindung, eine elektrische Feststellbremse bereitzustellen, mit der Nachteile herkömmlicher elektrischer Feststellbremsen vermieden werden können. Der Erfindung liegt insbesondere die Aufgabe zugrunde, eine elektrische Feststellbremse derart weiterzubilden, dass die Feststellbremse auch bei Wegfall oder Abschaltung der elektrischen Stromversorgung der elektrischen Feststellbremse oder bei einem Stromausfall im gesamten Bordnetz noch sicher eingelegt werden kann, damit das Fahrzeug bzw. die Zugkombination sicher abgestellt bzw. sicher im Stillstand gehalten werden kann.

Diese Aufgaben werden durch eine elektrische Feststellbremsvorrichtung gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße elektrische Feststellbremsvorrichtung für ein Fahrzeug weist in Übereinstimmung mit dem Stand der Technik wenigstens einen Federspeicherbremszylinder und eine elektrisch ansteuerbare erste Ventileinrichtung auf. Diese erste Ventileinrichtung ist ausgelegt, in Abhängigkeit von einem elektrischen Steuersignal, beispielsweise ausgelöst durch ein Bedienelement im Fahrerhaus für die Feststellbremsvorrichtung, eine Entlüftung oder eine Belüftung des wenigstens einen Federspeicherbremszylinders einzuleiten.

Die Erfindung bildet diesen gattungsgemäßen Stand der Technik dadurch weiter, dass die Feststellbremsvorrichtung eine schaltbare zweite Ventileinrichtung mit einem pneumatischen Steuereingang und einem elektrischen Steuereingang umfasst, die ausgeführt ist, eine Entlüftung des wenigstens einen Federspeicherbremszylinders einzuleiten, wenn am pneumatischen Steuereingang ein pneumatischer Druck anliegt, der kleiner als ein vorbestimmter Schwellenwert ist, und wenn am elektrischen Steuereingang kein elektrischer Strom verfügbar ist bzw. dort keine Spannung anliegt. Der elektrische Steuereingang der zweiten Ventileinrichtung ist ein Anschluss für eine elektrische Signalleitung. Der pneumatische Steuereingang ist ein Anschluss für eine Druckluftleitung, über den die zweite Steuereinrichtung pneumatisch ansteuerbar ist.

Gemäß allgemeinen Gesichtspunkten der Erfindung ist die schaltbare zweite Ventileinrichtung somit sowohl pneumatisch als auch elektrisch betätigbar und stellt eine zusätzliche Sicherheitsschaltung dar, mittels der sicherheitskritische Störungsfälle auf konstruktiv einfache Weise abgesichert werden können. Die schaltbare zweite Ventileinrichtung reagiert somit auf pneumatischen Druck und auf elektrischen Strom und stellt einen Back-up-Mechanismus zum Einlegen der elektrischen Feststellbremse nach einer Betätigung des Not-Aus-Trennschalters oder nach einem Wegfall der Spannungsversorgung der elektrischen Feststellbremsvorrichtung aufgrund anderweitiger Ursachen dar.

Ein besonderer Vorzug der Erfindung liegt somit darin, dass die Feststellbremse unabhängig vom elektrischen Betriebszustand des Fahrzeugs betätigt werden kann.

Aufgrund der erfindungsgemäßen Ausführung der zweiten Ventileinrichtung leitet diese jedoch die Entlüftung des wenigstens einen Federspeicherbremszylinders zum Einlegen der Feststellbremse nicht unmittelbar nach Wegfall der Stromversorgung ein. Stattdessen kann beispielsweise der Fahrer durch Absenkung eines pneumatischen Drucks, der am pneumatischen Steuereingang anliegt, den Zeitpunkt zum Einlegen der elektrischen Feststellbremse selbst bestimmen. Auf diese Weise kann ein unkontrolliertes Abbremsen des Fahrzeugs, beispielsweise bei Betätigung des Not-Aus-Trennschalters während der Fahrt, vermieden werden.

Gemäß einer ersten Variante kann die zweite Ventileinrichtung ausgeführt sein, eine Entlüftung lediglich des wenigstens einen Federspeicherbremszylinders einzuleiten, wenn am pneumatischen Steuereingang ein pneumatischer Druck anliegt, der kleiner als ein vorbestimmter Schwellwert ist, und wenn am elektrischen Steuereingang kein elektrischer Strom verfügbar ist. Gemäß dieser ersten Variante wird somit der Druckluftkreis der Feststellbremse, auch als Kreis 3 bei einer vierkreisigen Druckluftbremsanlage bezeichnet, nicht vollständig entlüftet und auch die andere Kreise werden nicht auf Sicherungsdruck entlüftet.

Gemäß einer zweiten Variante kann die schaltbare zweite Ventileinrichtung jedoch ausgeführt sein, nicht nur die Entlüftung des wenigstens einen Federspeicherbremszylinders einzuleiten, sondern ferner einen Druckluftkreis der Feststellbremse (Kreis 3) vollständig und die restlichen Druckluftkreise auf Sicherungsdruck zu entlüften, wenn am pneumatischen Steuereingang ein pneumatischer Druck anliegt, der kleiner als ein vorbestimmter Schwellwert ist, und wenn am elektrischen Steuereingang kein elektrischer Strom verfügbar ist. Der Sicherungsdruck ist der Druck, der aufgrund eines Mehrkreisschutzventils in den anderen Druckluftkreisen mindestens gehalten wird, wenn in einem Druckluftkreis ein Druckabfall auftrifft.

Gemäß einer bevorzugten Ausgestaltungsform kann der pneumatische Steuereingang pneumatisch mit einem der Druckluftkreise 1 bis 3 einer vierkreisigen Druckluftbremsanlage des Fahrzeugs gekoppelt sein, so dass der am pneumatischen Steuereingang anliegende Druck durch Betätigung einer Betriebsbremse absenkbar ist, z. B. wenn der Luftpresser nicht mehr läuft. Bei einer mehrkreisigen Druckluftbremsanlage eines Kraftfahrzeugs sind die einzelnen Kreise üblicherweise wie folgt aufgeteilt: Kreis 1 ist der Betriebsbremskreis 1, Kreis 2 ist der Betriebsbremskreis 2 und Kreis 3 ist der Kreis der Federspeicher-Feststellbremse und ggf. der Anhängerversorgung.

Eine beispielhafte Realisierung dieser Ausgestaltungsform sieht hierbei vor, dass der pneumatische Steuereingang pneumatisch mit einer Versorgungsdruckluftleitung gekoppelt ist, die ein Mehrkreisschutzventil, insbesondere ein Vierkreisschutzventil, einer mehrkreisigen Druckluftbremsanlage des Fahrzeugs mit einem Anschluss zur Druckluftversorgung der ersten Ventileinrichtung verbindet. Dadurch kann auf konstruktiv einfache Weise ein geeigneter Steuerdruck zur Steuerung der zweiten Ventileinrichtung angelegt werden. Gemäß diese Variante liegt der normale Betriebsdruck des Kreises der Federspeicher-Feststellbremse und ggf. Anhängerversorgung am Steuereingang der zweiten Ventileinrichtung an. Dieser Betriebsdruck bleibt in der Regel auch bei Ausfall der Stromversorgung erhalten.

Gemäß einer besonders vorteilhaften Variante dieser Ausgestaltungsform ist der vorbestimmte Schwellenwert so festgelegt, dass dieser größer als ein Schließdruck des Mehrkreisschutzventils ist, unterhalb dessen ein oder mehrere Betriebsbremskreise und ein Kreis der Federspeicher-Feststellbremse voneinander getrennt werden.

Ein besonderer Vorzug dieser Ausführungsvariante liegt darin, dass nach Betätigung des Not-Aus-Trennschalters oder Ausfall der Stromversorgung das Umschalten der zweiten Ventileinrichtung zum Einlegen der Feststellbremse durch Betätigung der Betriebsbremse zu einem geeigneten Zeitpunkt ausgelöst werden kann. Durch Betätigen der Betriebsbremse kann der Druck im Betriebsbremskreis unter den vorbestimmten Schwellenwert abgesenkt werden. Da der Schwellenwert über dem Schließdruck des Mehrkreisschutzventils liegt, bleibt der Betriebsbremskreis mit dem Kreis der Federspeicher-Feststellbremse bis zur Erreichung des Schwellenwerts pneumatisch gekoppelt, derart, dass auch der Druck im Kreis der Federspeicher-Feststellbremse entsprechend abgesenkt wird. Damit sinkt auch der am pneumatischen Steuereingang der zweiten Ventileinrichtung anliegende Steuerdruck unter den Schwellenwert, woraufhin die zweite Ventileinrichtung umschaltet und ein Entlüften des wenigstens einen Federspeicherbremszylinders einleitet.

Es wird jedoch betont, dass der vorbestimmte Schwellwert bei anderen Ausführungsvarianten auch kleiner als der Schließdruck des Mehrkreisschutzventils sein kann. Dies kann beispielsweise der Fall sein, wenn der pneumatische Steuereingang mit einer Druckluftleitung eines Betriebsbremskreises verbunden ist. Hierbei ist der vorbestimmte Schwellwert so zu wählen, dass der am pneumatischen Steuereingang anliegende Druck durch den Fahrer auf den Schwellwert absenkbar ist, z. B. durch Betätigen der Betriebsbremse.

Der elektrische Steuereingang der zweiten Ventileinrichtung kann beispielsweise mit einer Fahrzeugbatterie verbunden sein, um diesen mit einer Spannung und Dauerstrom zu versorgen, beispielsweise über die Klemme "30". Gemäß einer weiteren Variante kann der elektrische Steuereingang der zweiten Ventileinrichtung elektrisch mit einer Zündstartschaltung, beispielsweise über die Klemme "15", verbunden sein, so dass bei Einführung des Zündschlüssels eine Spannung am elektrischen Steuereingang anliegt, solange der Not-Aus-Trennschalter nicht betätigt ist. Es wird betont, dass ferner auch eine separate Ansteuerung des elektrischen Steuereingangs möglich ist.

Die elektrisch ansteuerbare erste Ventileinrichtung kann eine herkömmliche, aus dem Stand der Technik bekannte Ventileinrichtung für eine elektrische Feststellbremsvorrichtung sein. Diese kann eine Anordnung aus mehreren Ventilen umfassen, die typischerweise wiederum ein internes Relaisventil der ersten Ventileinrichtung ansteuern. Die erste Ventileinrichtung kann einen ersten Anschluss für eine Versorgungsdruckluftleitung zur Verbindung der ersten Ventileinrichtung mit einer Druckluftquelle und einen zweiten Anschluss für eine Druckluftleitung umfassen und in an sich bekannter Weise ausgeführt sein, im gelösten Zustand der Feststellbremsvorrichtung eine an dem zweiten Anschluss angeschlossene Druckluftleitung mit Druck der Druckluftquelle zu beaufschlagen und zum Einlegen der Feststellbremsvorrichtung die am zweiten Anschluss angeschlossenen Druckluftleitung zu entlüften.

Über den zweiten Anschluss ist die erste Ventileinrichtung mit einem oder mehreren Federspeicherbremszylindern über entsprechende Druckluftleitungen verbindbar. Die erste Ventileinrichtung kann ferner eine Steuereinrichtung umfassen, die eingerichtet ist, mittels elektrischer Signalleitungen zu erfassen, ob ein Bedienelement zum Einlegen und Lösen der Feststellbremsvorrichtung betätigt wurde, und, falls das Bedienelement betätigt wurde, die Ventilanordnung der ersten Ventileinrichtung zum Einlegen oder Lösen der Feststellvorrichtung entsprechend anzusteuern.

Bei Nutzfahrzeugen mit Anhängern kann die erste Ventileinrichtung ferner einen dritten Anschluss zum Verbinden der Ventileinrichtung mit einer Anhängerventileinrichtung, die die Anhängerbremsanlage steuert, aufweisen. Hierbei kann die erste Ventileinrichtung wiederum ausgelegt sein, im gelösten Zustand der Feststellbremsvorrichtung die am wenigstens einen dritten Anschluss angeschlossene Druckluftleitung mit Druck der Druckluftquelle zu beaufschlagen und zum Einlegen der Anhängerbremsanlage die am wenigstens einen dritten Anschluss angeschlossene Druckluftleitung zu entlüften.

Gemäß einer besonders vorteilhaften Ausgestaltungsform ist die zweite Ventileinrichtung als ein schaltbares Steuerventil ausgeführt, aufweisend einen ersten Anschluss, der pneumatisch mit dem zweiten Anschluss der ersten Ventileinrichtung verbunden ist, einen zweiten Anschluss, der pneumatischen mit dem wenigstens einen Federspeicherbremszylinder verbunden ist, und einen Entlüftungsausgang, über den der zweite Anschluss mit einer Drucksenke, vorzugsweise der Umgebungsluft, verbindbar ist. Alternativ kann auch der erste Anschluss über den Entlüftungsausgang mit der Drucksenke verbindbar sein.

Gemäß dieser Ausgestaltungsform kann das Steuerventil in eine Durchlassstellung geschaltet sein, in der der erste Anschluss und der zweite Anschluss der Ventileinrichtung verbunden sind und in der der erste Anschluss und der zweite Anschluss nicht über den Entlüftungsausgang entlüftet werden, wenn am pneumatischen Steuereingang ein pneumatischer Druck anliegt, der mindestens so groß wie der vorbestimmte Schwellenwert ist, und/oder wenn am elektrischen Steuergang ein elektrischer Strom verfügbar ist bzw. eine Spannung anliegt. In dieser Durchlassstellung kann somit das Entlüften und Belüften des wenigstens einen Federspeicherbremszylinders in herkömmlicher Weise durch die elektrisch ansteuerbare erste Ventileinrichtung erfolgen.

Ferner kann das Steuerventil in einer Entlüftungsstellung geschaltet sein, wenn am pneumatischen Steuereingang ein pneumatischer Druck anliegt, der kleiner als der vorbestimmte Schwellenwert ist, und wenn am elektrischen Steuereingang kein elektrischer Strom verfügbar ist. Hierbei kann das Steuerventil gemäß der vorstehend beschriebenen ersten Variante so ausgeführt sein, dass in der Entlüftungsstellung lediglich der zweite Anschluss des Steuerventils über den Entlüftungsanschluss entlüftet wird. In diesem Fall leitet somit das Steuerventil eine Entlüftung des wenigstens einen Federspeicherbremszylinders ein und bewirkt folglich das Einlegen der Feststellbremse.

Alternativ kann das Steuerventil gemäß der zweiten Variante so ausgeführt sein, dass in der Entlüftungsstellung sowohl der erste Anschluss als auch der zweite Anschluss des Steuerventils über den Entlüftungsanschluss entlüftet werden. In diesem Fall leitet das Steuerventil nicht nur die Entlüftung des wenigstens einen Federspeicherbremszylinders ein und bewirkt folglich das Einlegen der Feststellbremse, sondern zugleich erfolgt die vollständige Entlüftung des Druckluftkreises der Feststellbremse (Kreis 3) und die Entlüftung der restlichen am Mehrkreisschutzventil angeschlossenen Druckluftkreise auf Sicherungsdruck.

Ein besonderer Vorzug dieser Ausführungsvarianten liegt somit darin, dass mit lediglich einem pneumatisch und elektrisch ansteuerbaren schaltbaren Steuerventil ein sicherer Back-up-Mechanismus bereitgestellt wird, über den die Feststellbremse auch nach Ausfall der Stromversorgung sicher eingelegt werden kann.

Eine alternative Variante der erfindungsgemäßen Realisierung sieht vor, dass die zweite Ventileinrichtung ein Relaisventil und ein pneumatisch und elektrisch ansteuerbares schaltbares Steuerventil aufweist. Das Relaisventil hat einen Steuereingang, einen mit dem zweiten Anschluss der ersten Ventileinrichtung verbundenen Arbeitseingang, einen mit dem mindestens einen Federspeicherbremszylinder verbundenen Arbeitsausgang und einen Entlüftungsausgang.

Gemäß dieser Variante hat das Steuerventil einen ersten Anschluss, der pneumatisch mit einer Versorgungsdruckluftleitung gekoppelt ist, die ein mehrkreisiges Schutzventil einer mehrkreisigen Druckluftbremsanlage des Fahrzeugs mit einem Anschluss zur Druckluftversorgung der ersten Ventileinrichtung verbindet, einen zweiten Anschluss, der pneumatisch mit dem Steuereingang des Relaisventils verbunden ist, und einen Entlüftungsausgang, über den der zweite Anschluss mit einer Drucksenke, z. B. der Umgebungsluft, verbindbar ist, umfasst. Eine alternative Möglichkeit der erfindungsgemäßen Realisierung sieht vor, dass auch der erste Anschluss des Steuerventils über den Entlüftungsausgang des Steuerventils mit der Drucksenke verbindbar ist. Das Mehrkreisschutzventil kann beispielsweise ein Vierkreisschutzventil sein.

Gemäß der vorgenannten Varianten der erfindungsgemäßen Realisierung kann das Steuerventil ausgeführt sein, das Relaisventil in eine Durchlassstellung zu schalten, in der der Arbeitseingang mit dem Arbeitsausgang des Relaisventils verbunden ist, wenn am pneumatischen Steuereingang ein pneumatischer Druck anliegt, der mindestens so groß wie der vorbestimmte Schwellenwert ist und/oder wenn am elektrischen Steuereingang ein elektrischer Strom verfügbar ist.

In dieser Durchlassstellung ist die Entlüftung und Belüftung des wenigstens einen Federspeicherbremszylinders wiederum in herkömmlicher Weise durch die erste Ventileinrichtung steuerbar, z. B. bei intakter Stromversorgung.

Das Steuerventil dieser Ausführungsvariante ist ferner ausgeführt, das Relaisventil in eine Entlüftungsstellung zu schalten, in der der Arbeitsausgang des Relaisventils über den Entlüftungsausgang entlüftet ist, wenn am pneumatischen Steuereingang des Steuerventils ein pneumatischer Druck anliegt, der kleiner als der vorbestimmte Schwellenwert ist, und wenn am elektrischen Steuereingang kein elektrischer Strom verfügbar ist bzw. keine Spannung anliegt.

Bei Stromausfall kann somit wiederum über die zweite Ventileinrichtung in der Variante mit dem Steuerventil und dem Relaisventil eine Entlüftung des wenigstens einen Federspeicherbremszylinders eingeleitet werden, um die Feststellbremsvorrichtung einzulegen, jedoch erst dann, wenn der am Steuerventil anliegende pneumatische Druck den vorbestimmten Schwellenwert unterschreitet. Es wurde vorstehend bereits erwähnt, dass der am Steuerventil anliegende Steuerdruck vom Fahrer beispielsweise durch Betätigen der Betriebsbremse gezielt unter den Schwellenwert abgesenkt werden kann.

Ein besonderer Vorzug der Ausführungsvariante mit dem zusätzlichen Relaisventil liegt darin, dass die erforderliche Steuerungsgröße kleiner ist und folglich kleinere Leitungsquerschnitte als in der Variante ohne zusätzliches Relaisventil eingesetzt werden können.

Das Steuerventil in den beiden vorhergenannten Ausführungsvarianten kann ein 3/2-Wegeventil sein. Ferner kann das Steuerventil, insbesondere das 3/2-Wegeventil, als ein Ventil mit Federrückstellung ausgebildet sein, derart, dass bei Anliegen von Strom bzw. Spannung an der elektrischen Steuerleitung des Steuerventils die erzeugte Magnetkraft ausreicht, um das Ventil durch Spannung der Feder in der Entlüftungsstellung zu halten.

Das Steuerventil ist, wie vorstehend erwähnt, jedoch so ausgeführt, dass alternativ bereits das Anliegen eines Steuerdrucks ausreicht, der größer als der vorbestimmte Schwellenwert ist, um das Ventil in der Durchlassstellung zu halten.

Sinkt der am pneumatischen Steuereingang, anliegende Steuerdruck unter den vorbestimmten Schwellenwert und fällt zusätzlich die anliegende Spannung am elektrischen Steuereingang weg, bewirkt die gespannte Feder eine Schaltung des Ventils in die Durchlassstellung. Es wird betont, dass die vorgenannten Ausführungsvarianten lediglich konstruktiv besonders einfache und damit vorteilhafte Ausführungsvarianten des allgemeinen Erfindungsgedanken sind, die zweite Ventileinrichtung jedoch auch mittels anderer konstruktiver Varianten umgesetzt werden kann, z. B. durch zwei in Serie geschaltete Steuerventile.

Ferner kann die zweite Ventileinrichtung, insbesondere das Steuerventil der vorstehend beschriebenen Ausführungsvariante, derart ausgeführt sein, dass die Entlüftung des mindestens einen Federspeicherbremszylinders gedrosselt durchgeführt wird. Beispielsweise kann der Entlüftungsausgang der zweiten Ventileinrichtung gedrosselt ausgebildet sein, oder alternativ kann der Entlüftungsausgang der zweiten Ventileinrichtung mit einem Drosselventil verbunden sein. Dadurch kann ein ruckartiges Einlegen der Feststellbremse vermieden werden.

Im Rahmen der Erfindung besteht ferner die Möglichkeit, die Drosselung vorteilhafterweise so auszulegen, dass bei einem noch mitlaufenden Fahrzeugmotor zu einem Zeitpunkt der Entlüftung des wenigstens einen Federspeicherbremszylinders durch die zweite Ventileinrichtung ein Luftpresser der Druckluftversorgung noch genügend Druckluft nachliefert, um den Verlust über die gedrosselte Entlüftung zu kompensieren. Hierzu kann die Drosselung der zweiten Ventileinrichtung einstellbar sein.

Diese Variante vermeidet beispielsweise das plötzliche Einfallen der Feststellbremse bei einer Betätigung des Not-Aus-Trennschalters während der Fahrt und für den Fall, dass nicht mehr genügend Druck im Bremssystem vorhanden ist, so dass der vorbestimmte Schwellenwert unterschritten wird. In dieser Situation schaltet die zweite Ventileinrichtung in die Entlüftungsstellung. Dennoch erfolgt kein sofortiges Einlegen der Feststellbremse, da der noch mitlaufende Motor über den Luftpresser genügend Energie nachfördert, um den Verlust über die Drosselung der zweiten Ventileinrichtung zu kompensieren. Erst für den Fall, dass der Motor nicht mehr mitläuft, werden die Federspeicher gedrosselt entlüftet, so dass das Fahrzeug noch sicher abgestellt werden kann.

Zusammenfassend ist festzustellen, dass mittels der zweiten Ventileinrichtung über zwei getrennt voneinander arbeitende Energiesysteme (pneumatisch und elektrisch) eine Sicherheitsschaltung bereitgestellt wird, so dass die Feststellbremse unabhängig vom elektrischen Betriebszustand des Fahrzeugs immer sicher eingelegt werden kann. Die zweite Ventileinrichtung kann in einer herkömmlichen ersten Ventileinrichtung integriert werden, kann in deren Relaisschaltung eingebunden werden oder über deren Relaisschaltung wirken, oder sie kann auch als zusätzliches separates Ventil im Fahrzeug verbaut werden.

Ein weiterer Aspekt der Erfindung betrifft ein Nutzfahrzeug mit einer elektrischen Feststellbremsvorrichtung nach einem der vorhergehenden Aspekte.

Weitere Einzelheiten und Vorteile der Erfindung werden im Folgenden unter Bezug auf die beigefügten Zeichnungen beschrieben. Es zeigen:
- Figur 1: eine elektrische Feststellbremsvorrichtung gemäß einem ersten Ausführungsbeispiel; und
- Figur 2: eine elektrische Feststellbremsvorrichtung gemäß einem zweiten Ausführungsbeispiel.

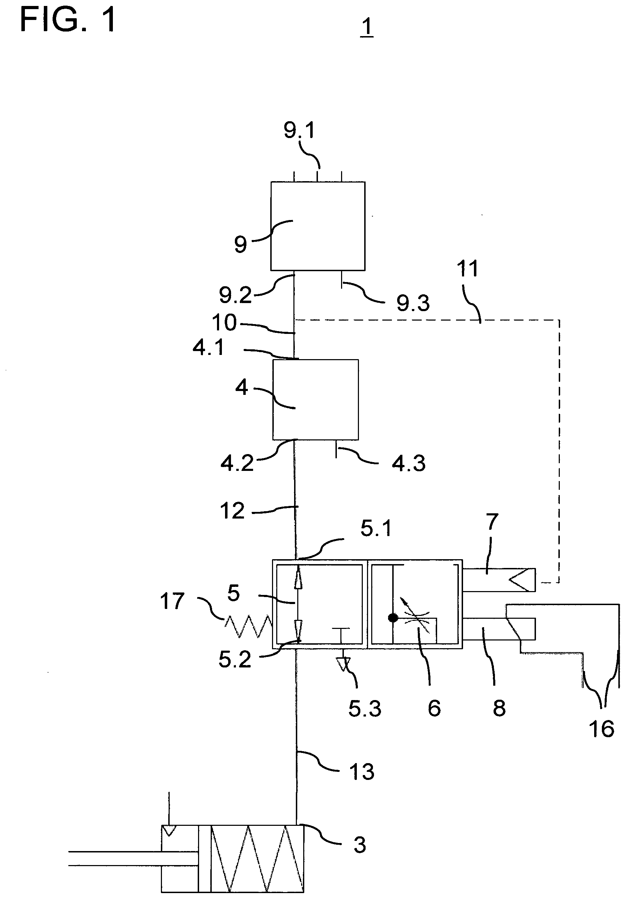

Figur 1 erläutert schematisch mit einem Blockschaltbild ein erstes Ausführungsbeispiel der elektrischen Feststellbremsanlage mit einem Federspeicherbremszylinder 3.

Der Federspeicherbremszylinder 3 weist eine Federkammer mit einer Feder auf sowie eine Druckkammer, die über die Druckluftleitungen 12, 13 mit Druck beaufschlagt oder aber entlüftet werden kann. Die Federspeicherbremszylinder 3 (von denen in Figur 1 nur einer gezeigt ist) dienen als Aktoreinrichtung, um mechanische Bauteile einer Radbremseinrichtung eines Rades zu betätigen, insbesondere um die mechanischen Bauteile in Eingriff (Federspeicherbremszylinderentlüftung) und/oder außer Eingriff (Federspeicherbremszylinder belüftet) zu bringen. Der Federspeicherbremszylinder 3 kann auch als Teil eines Kombi-Bremszylinders, auch Tristop-Zylinder genannt, ausgebildet sein, der jeweils an einer Radachse des Nutzfahrzeugs angeordnet ist.

Die Feststellbremsanlage steuert die Feststellbreme über einen Druckmittelkreis, von dem in Figur 1 zur Verdeutlichung der Erfindung nur ein Teil dargestellt ist. So ist in Figur 1 nur der Kreis (Kreis 3) der Feststellbremsanlage dargestellt, der am Anschluss 9.2 eines Vierkreisschutzventils 9 angeschlossen ist. Die Anschlüsse 9.1 und 9.3 bezeichnen den Eingangsanschluss und die drei weiteren Ausgangsanschlüsse des Vierkreisschutzventils 9. Eingangsseitig des Vierkreisschutzventils 9 sind weitere, nicht gezeigte, jedoch in bekannter herkömmlicher Weise ausgebildete Komponenten angeordnet, wie beispielsweise ein Druckmittelvorratsbehälter, ein Kompressor, ein Druckregler und die weiteren Kreise der mehrkreisigen Druckluftbremsanlage, insbesondere der Betriebsbremskreise.

Druckluft aus dem Druckmittelvorratsbehälter wird über das Vierkreisschutzventil 9 und die Druckluftleitung 10 einem Versorgungsdruckluftanschluss 4.1 einer elektrisch ansteuerbaren Ventileinrichtung 4, nachfolgend auch als erste Ventileinrichtung bezeichnet, zugeführt.

Die zur elektropneumatischen Steuerung der Belüftung bzw. Entlüftung eines oder mehrerer Federspeicherbremszylinder 3 eingesetzte elektrisch ansteuerbare Ventileinrichtung 4 ist an sich aus dem Stand der Technik bekannt und muss deshalb nicht näher beschrieben werden. An dieser Stelle ist lediglich zu erwähnen, dass eine derartige elektrisch ansteuerbare Ventileinrichtung 4 in der Regel den Druckluftversorgungsanschluss 4.1 für eine Versorgungsleitung zur Verbindung der Ventileinrichtung 4 mit einem Druckluftvorrat und weitere Anschlüsse 4.2 und 4.3 für Druckluftleitungen aufweist. Über den Anschluss 4.2 ist die erste Ventileinrichtung 4 über Druckluftleitungen unmittelbar oder mittelbar (wie im Ausführungsbeispiel der Figur 1) mit einem oder mehreren Federspeicherbremszylindern 3 verbindbar.

Die Ventileinrichtung 4 weist ferner einen Anschluss für elektrische Signalleitungen auf (jeweils nicht gezeigt), um die Ventileinrichtung 4 bzw. die darin integrierte Steuereinrichtung mit einem Bedienelement zum Einlegen und Lösen der Feststellbremsvorrichtung zu verbinden. Hierbei ist die Ventileinrichtung 4 bzw. die darin integrierte Steuereinheit eingerichtet zu erfassen, ob das über die Signalleitung angeschlossene Bedienelement betätigt wurde, und in Abhängigkeit von der Betätigung eine Entlüftung bzw. Belüftung der Federspeicherbremszylinder über den Anschluss 4.2 einzuleiten.

Im vorliegenden Beispiel weist die erste Ventileinrichtung 4 ferner einen Anschluss 4.3 auf, der dazu vorgesehen ist, mit einer Anhängersteuerventilanordnung (nicht gezeigt) verbunden zu werden. Die Ventileinrichtung 4 kann als bauliche Einheit mit einem Gehäuse realisiert sein, an der die entsprechenden pneumatischen Anschlüsse 4.1-4.3 und die Anschlüsse für die elektrischen Signalleitungen vorgesehen sind, um die elektrischen und pneumatischen Leitungen an die Ventileinrichtung 4 anzuschließen.

Zur Vereinfachung der Darstellung ist die konkrete Ventilanordnung im Innern der Ventileinrichtung 4, die in üblicher Weise ausgeführt ist, nicht dargestellt. Hierbei ist der innere Aufbau bzw. die Ausgestaltung der enthaltenden Ventilanordnung der Ventileinrichtung 4 nicht auf einen bestimmten konstruktiven Aufbau beschränkt. Hierbei ist lediglich festzustellen, dass die Ventileinrichtung 4 in bekannter Weise ausgeführt ist, im gelösten Zustand der Feststellbremsvorrichtung eine an dem Anschluss 4.2 angeschlossene Druckluftleitung 12 mit Druck des Druckluftvorrats zu beaufschlagen und zum Einlegen der Feststellbremsvorrichtung die Druckluftleitung 12 zu entlüften. Beispielsweise kann die Ventilanordnung im Inneren der Ventileinrichtung 4 üblicherweise ein Relaisventil (nicht dargestellt) umfassen, das in eine Durchlassstellung (Feststellbremse im nicht eingelegtem Zustand) und eine Entlüftungsstellung (Feststellbremse im eingelegtem Zustand) schaltbar ist, wobei in der Entlüftungsstellung eine Arbeitskammer des internen Relaisventils, die über die Druckluftleitung 12 mit dem Federspeicherbremszylinder 3 koppelbar ist, über einen Lüftungsausgang entlüftet wird. Fällt nun die Stromversorgung aus oder wird bewusst durch Betätigung des Not-Aus-Trennschalters abgeschaltet, kann die elektrisch ansteuerbare erste Ventileinrichtung nicht mehr über die elektrischen Signalleitungen angesteuert werden.

Die an sich bekannte, erste Ventileinrichtung ist um eine Sicherheitsschaltung so erweitert, dass sie auch bei Ausfall der Stromversorgung, bei der die herkömmliche elektrisch angesteuerte Ventileinrichtung 4 nicht mehr steuerbar ist, eingelegt werden kann.

Die Feststellbremsvorrichtung 1 des ersten Ausführungsbeispiels umfasst hierzu ferner ein Steuerventil 5, das als 3/2-Wegeventil mit Federrückstellung ausgeführt ist, das in der Druckluftverbindung 12, 13 zwischen der ersten Ventileinrichtung und dem wenigstens einem Federspeicherbremszylinder 3 angeordnet ist.

Das schaltbare Steuerventil 5 hat einen ersten Anschluss 5.1, der pneumatisch mit dem zweiten Anschluss 4.2 der ersten Ventileinrichtung 4 verbunden ist, einen zweiten Anschluss 5.2, der pneumatisch mit dem wenigstens einen Federspeicherbremszylinder 3 verbunden ist, und einen mit einer zusätzlichen Drosselung 6 ausgestatteten Entlüftungsausgang 5.3. Das Steuerventil kann beispielsweise so ausgebildet sein (nicht gezeigt), dass in einer Entlüftungsstellung nur der zweite Anschluss 5.2 über den Entlüftungsausgang 5.3 entlüftet wird, nicht jedoch der erste Anschluss 5.1.

Figur 1 zeigt jedoch eine zweite Variante, bei der das Steuerventil so ausgebildet ist, dass in einer Entlüftungsstellung sowohl der erste Anschluss 5.1 als auch der zweite Anschluss 5.2 über den Entlüftungsausgang 5.3 entlüftet werden.

Das Steuerventil 5 ist sowohl elektrisch als auch magnetisch betätigbar. Hierzu hat das Steuerventil 5 einen pneumatischen Steuereingang 7, der über die Druckluftleitung 11 mit der Versorgungsdruckluftleitung 10, die das Vierkreisschutzventil 9 mit dem Versorgungsdrucklufteingang 4.1 der ersten Ventileinrichtung 4 verbindet, pneumatisch verbunden ist. Ferner ist ein elektrischer Steuereingang 8 vorgesehen, der über elektrischen Leitungen 16 mit einer Spannungsquelle, z. B. der Zündstartschaltung über Klemme 15, verbunden ist. Das Ventil 5 reagiert somit auf pneumatischen Druck und auf elektrischen Strom.

Falls beides nicht vorhanden ist, drückt die mechanische Feder 17 das Ventil in eine sichere Stellung (Entlüftungsstellung, in Figur 1 nicht gezeigt), in der die Anschlüsse 5.1 und 5.2 über den Entlüftungsausgang 5.3 entlüftet werden.

In Figur 1 ist jedoch die Durchlassstellung gezeigt, für den Fall, dass Spannung am elektrischen Steuereingang 8 anliegt. Hierbei wird durch den dadurch fließenden Strom eine ausreichende Magnetkraft aufgebaut, um die Feder 17 in einer gespannten Stellung zu der Durchlassstellung der Figur 1 zu halten. Falls zusätzlich oder alternativ ein pneumatischer Druck am pneumatischen Steuereingang 7 anliegt, der zumindest so groß wie der vorbestimmte Schwellenwert ist, wird das Steuerventil 5 ebenfalls in der in Figur 1 gezeigten Durchlassstellung gehalten. Im vorliegenden Ausführungsbeispiel ist der Mindestdruck beispielsweise auf 6,5 bar eingestellt. Es wird jedoch betont, dass der Mindestdruck abstimmbar ist und nach Belieben frei gewählt werden kann. Liegt somit in der Druckluftleitung 10 nach dem Vierkreisschutzventil 9 ein Druck von mindestens 6,5 bar an, reicht dies aus, um das Ventil 5 ebenfalls in der in Figur 1 gezeigten Durchlassstellung zu halten. In der Durchlassstellung sind somit die Anschlüsse 5.1 und 5.2 zwar miteinander pneumatisch verbunden, nicht jedoch mit dem Entlüftungsausgang 5.3. Vorliegend ist der Schwellenwert zumindest so groß gewählt, dass er unter dem normalen Betriebsdruck und über dem Schließdruck von z. B. etwas über 5 bar des Vierkreisschutzventils 9 liegt.

Nachfolgend werden beispielhaft einige unterschiedliche Betriebsszenarien erläutert, um die Funktionsweise des in Figur 1 gezeigten Ausführungsbeispiels zu erläutern.

Für den Fall, dass ein Not-Aus-Trennschalter während der Fahrt betätigt wird, fällt der Federspeichbremszylinder 3 nicht sofort ein, da im allgemeinen Fahrbetrieb in der Druckluftleitung 10 ein Druck anliegt, der größer als der eingestellte Mindestdruck des pneumatischen Steuereingangs 7 ist. Im vorliegenden Beispiel liegt somit mindestens 6,5 bar an, so dass das Ventil nicht umschalten kann.

Sollte jedoch nicht mehr genügend Druck vorhanden sein, wird das Ventil 5 in die Entlüftungsstellung umschalten, und es wird gedrosselt über den Ausgang 5.3 entlüftet. Da gemäß der in Figur 1 gezeigten Variante beide Anschlüsse 5.1 und 5.2 über den Entlüftungsausgang 5.3 entlüftet werden, erfolgt sowohl eine Entlüftung des wenigstens einen Federspeicherbremszylinders 3 über den Anschluss 5.2 und die Leitung 13 als auch eine Entlüftung des Feststellbremskreises "3" der mehrkreisigen Druckluftbremsanlage über den Anschluss 5.1 und die Leitung 12. Ferner erfolgt eine Entlüftung der anderen (nicht dargestellten) Kreise auf Sicherungsdruck.

In der vorliegenden Ausführungsvariante ist die Drosselung so ausgelegt, dass bei noch mit laufendem Motor der Luftpresser genügend Energie nachfördert, um den Verlust durch die gedrosselte Entlüftung zu kompensieren. Für den Fall, dass der Motor dann nicht mehr mitläuft, werden die Federspeicherbremszylinder 3 gedrosselt entlüftet, so dass das Fahrzeug noch sicher abgebremst werden kann, bis die Federspeicherbremszylinder 3 entlüftet sind.

Für den Fall, dass bei einem intakten oder nicht bewusst abgetrennten elektrischen System des Fahrzeugs die Druckluft unter den eingestellten Mindestdruck, als beispielsweise unter 6,5 bar zusammenbricht, z. B. aufgrund einer Leckage, schaltet das Ventil 5 ebenfalls nicht um, da am elektrischen Steuereingang 8 Strom anliegt.

Für den Fall, dass das Fahrzeug abgestellt wird und der Federspeicherbremszylinder 3 nicht eingelegt wird (und dies auch so gewollt ist), bleibt der Federspeicherbremszylinder 3 so lange belüftet, solange im Bremssystem über 6,5 bar Druck vorhanden sind. Erst wenn durch etwaige Leckagen diese Grenze unterschritten wird, schaltet das Ventil 5 in die Entlüftungsstellung um. Dadurch kann ferner sichergestellt werden, dass im Unterschied zu einer elektrischen Ansteuerung des Ventils 5 nicht bei jeder Zündung der Federspeicher 3 eingelegt wird, bzw. dass der gesamte Druckluftvorrat auf Sicherungsdruck des Vierkreisschutzventils 4 entlüftet wird.

Für den Fall, dass bei einem stehenden Fahrzeug, aber noch laufendem Motor die Spannungsversorgung, beispielsweise durch einen Batteriedefekt, gestört ist, die Feststellbremsvorrichtung nicht eingelegt ist und der Motor abgestellt wird, muss der Fahrer durch mehrmaliges Betätigen der Betriebsbremsanlage den Druckluftvorrat der Bremsen auf 6,5 bar absenken und so ein Umschalten des Ventils 5 provozieren. Die Feststellbremsvorrichtung wird in diesem Fall langsam über die gedrosselte Entlüftung 5.3, 6 entlüftet, und der Fahrer kann nach kurzer Zeit das Fahrzeug verlassen. Das Abpumpen ist ein natürlicher Vorgang, da über längere Zeit das Betriebsbremspedal nicht konstant gehalten werden kann.

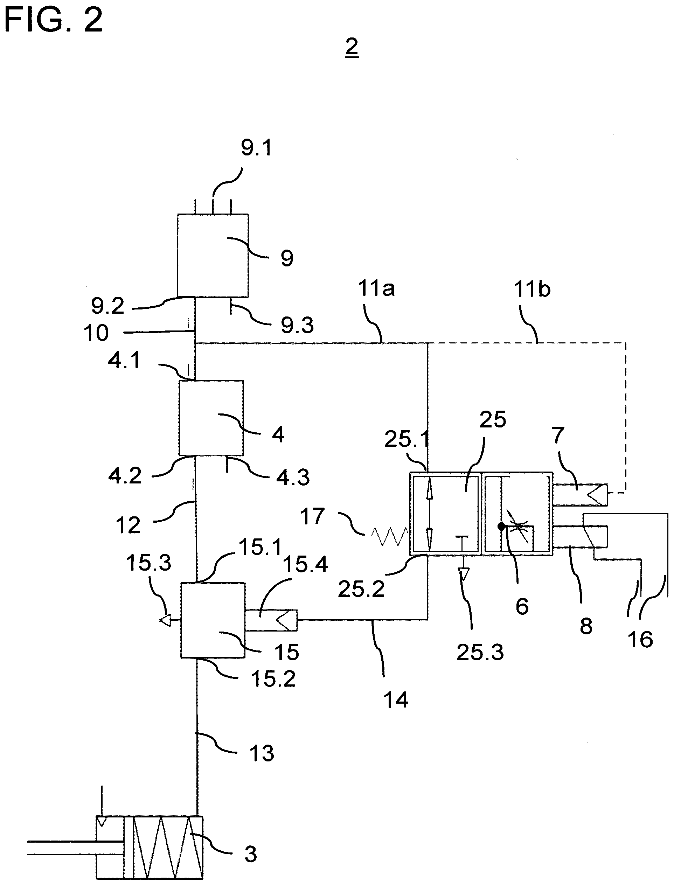

Figur 2 zeigt schematisch ein weiteres Ausführungsbeispiel einer elektrischen Feststellbremsvorrichtung 2. Hierbei entsprechen Komponenten mit gleichen Bezugszeichen wiederum den Komponenten der Figur 1 und werden nicht gesondert beschrieben.

Eine Besonderheit dieses Ausführungsbeispiels liegt darin, dass die erfindungsgemäße zusätzliche zweite Ventileinrichtung vorliegend neben dem Steuerventil 25 ein zusätzliches Relaisventil 15 umfasst.

Statt des elektrisch und pneumatisch steuerbaren Steuerventils der Figur 1 ist nun das Relaisventil 15 in der Druckluftverbindung zwischen dem Anschluss 4.2 der herkömmlich elektropneumatisch steuerbaren ersten Ventileinrichtung 4 und dem wenigstens einen Federspeicherbremszylinder 3 angeordnet. Hierbei ist ein Arbeitseingang 15.1 des Relaisventils der Druckluftleitung 12 mit dem Anschluss 4.2 der ersten Ventileinrichtung verbunden. Ein Arbeitsausgang 15.2 des Relaisventils 15 ist über die Druckluftleitung 3 mit dem wenigstens einen Federspeicherbremszylinder 3 verbunden. Das Relaisventil 15 verfügt ferner über einen Entlüftungsausgang 15.3 und einen Steuereingang 15.4.

Ferner ist wiederum ein zusätzliches Steuerventil, das in Figur 2 mit dem Bezugszeichen 25 bezeichnet ist, vorgesehen. Das Steuerventil 25 verfügt über einen ersten Anschluss 25.1, der pneumatisch mit der Versorgungsdruckluftleitung 10, die das Vierkreisschutzventil 9 mit dem Anschluss 4.1 der ersten Ventileinrichtung 4 verbindet, verbunden ist, und einen zweiten Anschluss 25.2, der pneumatisch an den Steuereingang 15.4 des Relaisventil 15 verbunden ist. Das Steuerventil 25 umfasst ferner wiederum einen gedrosselten Entlüftungsausgang 25.3 mit der Drosselung 6. Das Steuerventil 25 ist als 3/2-Wegeventil ausgeführt und über den pneumatischen Steuereingang 7 und den elektrischen Steuereingang 8 wiederum pneumatisch und elektrisch steuerbar.

In einem normalen Betriebszustand, beispielsweise bei intakter Stromversorgung und/oder normalem Betriebsdruck in der Druckluftleitung 10, der größer als der eingestellte Mindestdruck des pneumatischen Steuereingangs 7 ist, ist das Ventil 25 in einer Durchlassstellung, in der der Druck der Druckluftleitung 10 ebenfalls am Steuereingang 15 des Relaisventils anliegt und dieses in der Durchlassstellung hält, in der der Arbeitseingang 15.1 mit dem Arbeitsausgang 15.2 verbunden ist. In dieser in Figur 2 gezeigten Stellung können die Entlüftung und Belüftung des wenigstens einen Federspeicherbremszylinders 3 und somit das Einlegen und Lösen der Feststellbremsvorrichtung in gewohnter Weise durch Ansteuerung der ersten Ventileinrichtung 4 erfolgen. Fällt jedoch die Stromversorgung aus, so dass am elektrischen Steuereingang keine Spannung mehr anliegt, und fällt der Druck in der Druckluftleitung 10 unter den eingestellten Mindestdruck von beispielsweise 6,5 bar, dann schaltet das Steuerventil 25 in eine Entlüftungsstellung, in der der Anschluss 25.2 über den Anschluss 25.3 gedrosselt entlüftet wird. Dadurch schaltet das Relaisventil 15 in eine Entlüftungsstellung, in der der wenigstens eine Federspeicherbremszylinder 3 über den Entlüftungsausgang 15.3 des Relaisventils 15 entlüftet wird.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1, 2: Ausführungsbeispiele für eine elektrische Feststellbremsvorrichtung
- 3: Federspeicherbremszylinder
- 4: Herkömmliche elektropneumatisch ansteuerbare Ventileinrichtung
- 4.1: Versorgungsdruckluftanschluss
- 4.2: Druckluftanschluss zum Verbinden mit einem Federspeicherbremszylinder
- 4.3: Druckluftanschluss zum Verbinden mit einer Anhängerventileinrichtung
- 5, 25: 3/2-Wegeventil mit Federrückstellung und Drosselung
- 6: Drosselung
- 7: Pneumatischer Steuereingang
- 8: Elektrischer Steuereingang
- 9: Vierkreisschutzventil
- 9.1, 9.2, 9.3: Anschlüsse des Vierkreisschutzventils
- 10 bis 14: Druckluftleitungen
- 15: Relaisventil
- 15.1: Arbeitseingang
- 15.2: Arbeitsausgang
- 15.3: Entlüftungsausgang
- 15.4: Steuereingang
- 16: Elektrische Anschlussleitungen
- 17: Mechanische Feder

## Patentansprüche

1. Feststellbremsvorrichtung (1; 2) für ein Fahrzeug, vorzugsweise für ein Nutzfahrzeug, umfassend
wenigstens einen Federspeicherbremszylinder (3);
eine elektrisch ansteuerbare erste Ventileinrichtung (4), die ausgelegt ist, in Abhängigkeit von einem elektrischen Steuersignal eine Entlüftung und/oder eine Belüftung des wenigstens einen Federspeicherbremszylinders (3) einzuleiten; und
eine schaltbare zweite Ventileinrichtung (5; 25, 15), aufweisend einen pneumatischen Steuereingang (7) und einen elektrischen Steuereingang (8), die ausgeführt ist, eine Entlüftung des wenigstens einen Federspeicherbremszylinders (3) einzuleiten, wenn am pneumatischen Steuereingang (7) ein pneumatischer Druck anliegt, der kleiner als ein vorbestimmter Schwellwert ist, und wenn am elektrischen Steuereingang (8) kein elektrischer Strom verfügbar ist.

2. Feststellbremsvorrichtung nach Anspruch 1, **dadurch gekennzeichnet, dass** die schaltbare zweite Ventileinrichtung (5; 25, 15) ausgeführt ist, einen Druckluftkreis der Feststellbremsvorrichtung vollständig und die restlichen Druckluftkreise einer mehrkreisigen Druckluftbremsanlage auf Sicherungsdruck zu entlüften, wenn am pneumatischen Steuereingang (7) ein pneumatischer Druck anliegt, der kleiner als ein vorbestimmter Schwellwert ist, und wenn am elektrischen Steuereingang (8) kein elektrischer Strom verfügbar ist.

3. Feststellbremsvorrichtung nach Anspruch 1 oder 2, **dadurch gekennzeichnet,**
(a) **dass** der pneumatische Steuereingang (7) pneumatisch mit einem der Druckluftkreise 1 bis 3 einer vierkreisigen Druckluftbremsanlage des Fahrzeugs gekoppelt ist, derart, dass der am pneumatischen Steuereingang (7) anliegende Druck durch Betätigung einer Betriebsbremse absenkbar ist; und/oder
(b) **dass** der vorbestimmte Schwellwert so gewählt ist, dass der am pneumatischen Steuereingang (7) anliegende Druck auf den Schwellwert durch Betätigen der Betriebsbremse absenkbar ist.

4. Feststellbremsvorrichtung nach einem der Ansprüche 1 bis 3, **dadurch gekennzeichnet, dass** der pneumatische Steuereingang (7) pneumatisch mit einer Versorgungsdruckluftleitung (10) gekoppelt ist, die ein Mehrkreisschutzventil einer mehrkreisigen Druckluftbremsanlage des Fahrzeugs, insbesondere ein Vierkreisschutzventil (9), mit einem Anschluss zur Druckluftversorgung (4.1) der ersten Ventileinrichtung (4) verbindet.

5. Feststellbremsvorrichtung nach Anspruch 4, **dadurch gekennzeichnet, dass** der vorbestimmte Schwellwert größer als ein Schließdruck des Mehrkreisschutzventils ist, unterhalb dessen ein oder mehrere Betriebsbremskreise und ein Kreis der Federspeicher-Feststellbremse (1; 2) voneinander getrennt werden.

6. Feststellbremsvorrichtung nach einem der vorhergehenden Ansprüche, **dadurch gekennzeichnet,**
(a) **dass** der elektrische Steuereingang (8) zur Spannungsversorgung elektrisch mit einer Fahrzeugbatterie verbunden ist; oder
(b) **dass** der elektrische Steuereingang (8) zur Spannungsversorgung elektrisch mit einer Zündstartschaltung verbunden ist.

7. Feststellbremsvorrichtung nach einem der vorhergehenden Ansprüche, **dadurch gekennzeichnet, dass** die erste Ventileinrichtung (4) umfasst: einen ersten Anschluss (4.1) für eine Versorgungsdruckluftleitung zur Verbindung der ersten Ventileinrichtung (4) mit einer Druckluftquelle, einen zweiten Anschluss (4.2) für eine Druckluftleitung, wobei die erste Ventileinrichtung (4) ausgeführt ist, im gelösten Zustand der Feststellbremsvorrichtung (1; 2) eine an dem zweiten Anschluss (4.2) angeschlossene Druckluftleitung (12) mit Druck der Druckluftquelle zu beaufschlagen und zum Einlegen der Feststellbremsvorrichtung (1; 2) die am zweiten Anschluss (4.2) angeschlossene Druckluftleitung (12) zu entlüften.

8. Feststellbremsvorrichtung nach Anspruch 7, **dadurch gekennzeichnet,**
(a) **dass** die zweite Ventileinrichtung als ein schaltbares Steuerventil (5) ausgeführt ist, aufweisend einen ersten Anschluss (5.1), der pneumatisch mit dem zweiten Anschluss (4.2) der ersten Ventileinrichtung (4) verbunden ist, einen zweiten Anschluss (5.2), der pneumatisch mit dem wenigsten einen Federspeicherbremszylinder (3) verbunden ist, und einen Entlüftungsausgang (5.3), über den der zweite Anschluss (5.2) mit einer Drucksenke verbindbar ist; oder
(b) **dass** die zweite Ventileinrichtung als ein schaltbares Steuerventil (5) ausgeführt ist, aufweisend einen ersten Anschluss (5.1), der pneumatisch mit dem zweiten Anschluss (4.2) der ersten Ventileinrichtung (4) verbunden ist, einen zweiten Anschluss (5.2), der pneumatisch mit dem wenigsten einen Federspeicherbremszylinder (3) verbunden ist, und einen Entlüftungsausgang (5.3), über den der erste Anschluss (5.1) und der zweite Anschluss (5.2) mit einer Drucksenke verbindbar sind.

9. Feststellbremsvorrichtung nach Anspruch 8, **dadurch gekennzeichnet,**
(a) **dass** das Steuerventil (5) in eine Durchlassstellung geschaltet ist, in der der erste Anschluss (5.1) und der zweite Anschluss (5.2) des Steuerventils (5) verbunden sind, wenn am pneumatischen Steuereingang (7) ein pneumatischer Druck anliegt, der mindestens so groß wie der vorbestimmter Schwellwert ist, und/oder wenn am elektrischen Steuereingang (8) ein elektrischer Strom verfügbar ist; und
(b) **dass** das Steuerventil (5) in eine Entlüftungsstellung geschaltet ist, in der der zweite Anschluss (5.2) über den Entlüftungsanschluss (5.3) entlüftet wird, wenn am pneumatischen Steuereingang (7) ein pneumatischer Druck anliegt, der kleiner als der vorbestimmter Schwellwert ist, und wenn am elektrischen Steuereingang (8) kein elektrischer Strom verfügbar ist; oder
**dass** das Steuerventil (5) in eine Entlüftungsstellung geschaltet ist, in der der erste Anschluss (5.1) und der zweite Anschluss (5.2) über den Entlüftungsanschluss (5.3) entlüftet werden, wenn am pneumatischen Steuereingang (7) ein pneumatischer Druck anliegt, der kleiner als der vorbestimmter Schwellwert ist, und wenn am elektrischen Steuereingang (8) kein elektrischer Strom verfügbar ist.

10. Feststellbremsvorrichtung nach Anspruch 7, **dadurch gekennzeichnet, dass** die zweite Ventileinrichtung
(a) ein Relaisventil (15), das einen Steuereingang (15.4), einen mit dem zweiten Anschluss (4.2) der ersten Ventileinrichtung (4) verbundenen Arbeitseingang (15.1), einen mit dem mindestens einen Federspeicherbremszylinder (3) verbundenen Arbeitsausgang (15.2) und einen Entlüftungsausgang (15.3) aufweist, und
(b) ein schaltbares Steuerventil (25), aufweisend einen ersten Anschluss (25.1), der pneumatisch mit einer Versorgungsdruckluftleitung (10) gekoppelt ist, die ein Mehrkreisschutzventil einer mehrkreisigen Druckluftbremsanlage des Fahrzeugs, insbesondere ein Vierkreisschutzventil (9), mit einem Anschluss (4.1) zur Druckluftversorgung der ersten Ventileinrichtung (4) verbindet; einen zweiten Anschluss (25.2), der pneumatisch mit dem Steuereingang (15.4) des Relaisventils (15) verbunden ist, und einen Entlüftungsausgang (25.3) umfasst, wobei über den Entlüftungsausgang (25.3) der zweite Anschluss (25.2) mit einer Drucksenke verbindbar ist oder wobei über den Entlüftungsausgang (25.3) der ersten Anschluss (25.1) und der zweite Anschluss (25.2) mit einer Drucksenke verbindbar sind.

11. Feststellbremsvorrichtung nach Anspruch 10, **dadurch gekennzeichnet,**
(a) **dass** das Steuerventil (25) ausgeführt ist, das Relaisventil (15) in eine Durchlassstellung zu schalten, in der der Arbeitseingang (15.1) mit dem Arbeitsausgang (15.2) des Relaisventils (15) verbunden ist, wenn am pneumatischen Steuereingang (7) ein pneumatischer Druck anliegt, der mindestens so groß wie der vorbestimmter Schwellwert ist, und/oder wenn am elektrischen Steuereingang (8) ein elektrischer Strom verfügbar ist; und
(b) **dass** das Steuerventil (25) ausgeführt ist, das Relaisventil (15) in eine Entlüftungsstellung zu schalten, in der der Arbeitsausgang (15.2) des Relaisventils (15) über den Entlüftungsausgang (15.3) entlüftet ist, wenn am pneumatischen Steuereingang (7) des Steuerventils (25) ein pneumatischer Druck anliegt, der kleiner als der vorbestimmte Schwellwert ist, und wenn am elektrischen Steuereingang (8) kein elektrischer Strom verfügbar ist.

12. Feststellbremsvorrichtung nach einem der Ansprüche 8 bis 11, **dadurch gekennzeichnet,**
(a) **dass** das Steuerventil (5; 25) ein 3/2-Wegeventil ist; und/oder
(b) **dass** das Steuerventil (5; 25) ein Ventil mit Federrückstellung ist.

13. Feststellbremsvorrichtung nach einem der vorhergehenden Ansprüche, **dadurch gekennzeichnet, dass** die zweite Ventileinrichtung, insbesondere das Steuerventil, ausgeführt ist, die Entlüftung des mindestens einen Federspeicherbremszylinders gedrosselt durchzuführen.

14. Feststellbremsvorrichtung nach Anspruch 13, wenn abhängig von Anspruch 2, **dadurch gekennzeichnet, dass** die Drosselung so ausgelegt ist, dass bei einem noch mitlaufenden Fahrzeugmotor zu einem Zeitpunkt der Entlüftung der zweiten Ventileinrichtung ein Luftpresser der Druckluftversorgung noch genügend Druckluft nachliefert, um den Verlust über die gedrosselte Entlüftung zu kompensieren.

15. Feststellbremsvorrichtung nach einem der Ansprüche 7 bis 14, **dadurch gekennzeichnet,**
(a) **dass** der Entlüftungsausgang der zweiten Ventileinrichtung gedrosselt ausgebildet ist; und/oder
(b) **dass** der Entlüftungsausgang der zweiten Ventileinrichtung mit einem Drosselventil verbunden ist.

16. Nutzfahrzeug mit einer elektrischen Feststellbremsvorrichtung nach einem der vorhergehenden Ansprüche.

## Claims

1. Parking brake device (1; 2) for a vehicle, preferably for a truck, comprising
at least one spring accumulator brake cylinder (3);
an electrically controllable first valve device (4) which is configured to initiate an air purge and/or a fill of the at least one spring accumulator brake cylinder (3) as a function of an electrical control signal; and
a switchable second valve device (5; 25, 15) having a pneumatic control input (7) and an electric control input (8), which is configured to initiate a purge of the at least one spring accumulator brake cylinder (3) if a pneumatic pressure present at the pneumatic control input (7) is less than a predefined threshold value and if no electric current is available at the electric control input (8).

2. Parking brake device according to Claim 1, **characterized in that** the switchable second valve device (5; 25, 15) is configured to purge one compressed air circuit of the parking brake device completely and the remaining compressed air circuits of a multi-circuit compressed air braking system to safety pressure, if a pneumatic pressure present at the pneumatic control input (7) is less than a predefined threshold value and if no electric current is available at the electric control input (8).

3. Parking brake device according to Claim 1 or 2, **characterized in that**
(a) the pneumatic control input (7) is pneumatically coupled to one of the compressed air circuits 1 to 3 of a four-circuit compressed air braking system of the vehicle, such that the pressure present at the pneumatic control input (7) can be lowered by activation of a service brake; and/or
(b) the predefined threshold value is selected such that the pressure present at the pneumatic control input (7) can be lowered to the threshold value by activation of the service brake.

4. Parking brake device according to any of Claims 1 to 3, **characterized in that** the pneumatic control input (7) is pneumatically coupled to a supply compressed air line (10) which connects a multi-circuit protection valve, in particular a four-circuit protection valve (9), of a multi-circuit compressed air braking system of the vehicle to a compressed air supply port (4.1) of the first valve device (4).

5. Parking brake device according to Claim 4, **characterized in that** the predefined threshold value is greater than a closing pressure of the multi-circuit protection valve, below which one or more service brake circuits and a circuit of the spring accumulator parking brake (1; 2) are separated from each other.

6. Parking brake device according to any of the preceding claims, **characterized in that**
(a) the electric control input (8) is electrically connected to a vehicle battery for power supply; or
(b) the electric control input (8) is electrically connected to an ignition start circuit for power supply.

7. Parking brake device according to any of the preceding claims, **characterized in that** the first valve device (4) comprises: a first port (4.1) for a supply compressed air line for connecting the first valve device (4) to a compressed air source, a second port (4.2) for a compressed air line, wherein the first valve device (4) is configured to pressurise a compressed air line (12) connected to the second port (4.2) with the pressure of the compressed air source when the parking brake device (1; 2) is in the released state, and to purge the compressed air line (12) connected to the second port (4.2) for application of the parking brake device (1; 2).

8. Parking brake device according to Claim 7, **characterized in that**
(a) the second valve device is formed as a switchable control valve (5) having a first port (5.1) which is pneumatically connected to the second port (4.2) of the first valve device (4), a second port (5.2) which is pneumatically connected to the at least one spring accumulator brake cylinder (3), and a purge output (5.3) via which the second port (5.2) can be connected to a pressure sink; or
(b) the second valve device is configured as a switchable control valve (5) having a first port (5.1) which is pneumatically connected to the second port (4.2) of the first valve device (4), a second port (5.2) which is pneumatically connected to the at least one spring accumulator brake cylinder (3), and a purge output (5.3) via which the first port (5.1) and the second port (5.2) can be connected to a pressure sink.

9. Parking brake device according to Claim 8, **characterized in that**
(a) the control valve (5) is switched to a passage position in which the first port (5.1) and the second port (5.2) of the control valve (5) are connected if a pneumatic pressure present at the pneumatic control input (7) is at least as great as the predefined threshold value, and/or if an electric current is available at the electric control input (8); and
(b) the control valve (5) is switched to a purge position in which the second port (5.2) is purged via the purge port (5.3) if a pneumatic pressure present at the pneumatic control input (7) is less than a predefined threshold value, and if no electric current is present at the electric control input (8); or
the control valve (5) is switched to a purge position in which the first port (5.1) and the second port (5.2) are purged via the purge port (5.3) if a pneumatic pressure present at the pneumatic control input (7) is less than the predefined threshold value, and if no electric current is present at the electric control input (8).

10. Parking brake device according to Claim 7, **characterized in that** the second valve device comprises
(a) a relay valve (15) with a control input (15.4), a working input (15.1) connected to the second port (4.2) of the first valve device (4), a working output (15.2) connected to the at least one spring accumulator brake cylinder (3), and a purge output (15.3), and
(b) a switchable control valve (25) having a first port (25.1) pneumatically coupled to a supply compressed air line (10), which connects a multi-circuit protection valve of a multi-circuit compressed air braking system of the vehicle, in particular a four-circuit protection valve (9), to a compressed air supply port (4.1) of the first valve device (4), a second port (25.2) which is pneumatically connected to the control input (15.4) of the relay valve (15), and a purge output (25.3), wherein the second port (25.2) can be connected to a pressure sink via the purge output (25.3), or wherein the first port (25.1) and the second port (25.2) can be connected to a pressure sink via the purge output (25.3).

11. Parking brake device according to Claim 10, **characterized in that**
(a) the control valve (25) is configured to switch the relay valve (15) to a passage position, in which the working input (15.1) is connected to the working output (15.2) of the relay valve (15), if a pneumatic pressure present at the pneumatic control input (7) is at least as great as the predefined threshold value, and/or if an electric current is available at the electric control input (8); and
(b) the control valve (25) is configured to switch the relay valve (15) to a purge position, in which the working output (15.2) of the relay valve (15) is purged via the purge output (15.3), if a pneumatic pressure present at the pneumatic control input (7) of the control valve (25) is less than the predefined threshold value and if no electric current is available at the electric control input (8).

12. Parking brake device according to any of Claims 8 to 11, **characterized in that**
(a) the control valve (5; 25) is a 3/2 way valve; and/or
(b) the control valve (5; 25) is a valve with spring return.

13. Parking brake device according to any of the preceding claims, **characterized in that** the second valve device, in particular the control valve, is configured to carry out the purging of the at least one spring accumulator brake cylinder in a choked fashion.

14. Parking brake device according to Claim 13 insofar as dependent on Claim 2, **characterized in that** the choke is configured such that while the vehicle engine is still running at a time of purging of the second valve device, an air compressor of the compressed air supply still delivers sufficient compressed air to compensate for the loss via the choked purge.

15. Parking brake device according to any of Claims 7 to 14, **characterized in that**
(a) the purge output of the second valve device is configured choked; and/or
(b) the purge output of the second valve device is connected to a choke valve.

16. Truck with an electric parking brake device according to any of the preceding claims.

## Revendications

1. Arrangement de frein de stationnement (1 ; 2) pour un véhicule, de préférence un véhicule automobile, comprenant
au moins un cylindre de frein à accumulation (3) ;
un premier dispositif à vanne (4) à commande électrique qui est conçu pour initier une purge d'air et/ou une ventilation de l'au moins un cylindre de frein à accumulation (3) en fonction d'un signal de commande électrique ; et
un deuxième dispositif à vanne (5 ; 25, 15) commutable, possédant une entrée de commande pneumatique (7) et une entrée de commande électrique (8), lequel est réalisé pour initier une purge d'air de l'au moins un cylindre de frein à accumulation (3) lorsqu'à l'entrée de commande pneumatique (7) est appliquée une pression pneumatique qui est inférieure à une valeur de seuil prédéterminée et si aucun courant électrique n'est disponible à l'entrée de commande électrique (8).

2. Arrangement de frein de stationnement selon la revendication 1, **caractérisé en ce que** le deuxième dispositif à vanne (5 ; 25, 15) commutable est réalisé pour purger l'air d'un circuit d'air comprimé de l'arrangement de frein de stationnement entièrement et des autres circuits d'air comprimé d'un système de freinage à air comprimé à plusieurs circuits à une pression de sécurité lorsqu'à l'entrée de commande pneumatique (7) est appliquée une pression pneumatique qui est inférieure à une valeur de seuil prédéterminée et si aucun courant électrique n'est disponible à l'entrée de commande électrique (8).

3. Arrangement de frein de stationnement selon la revendication 1 ou 2, **caractérisé en ce**
(a) **que** l'entrée de commande pneumatique (7) est connectée pneumatiquement à l'un des circuits d'air comprimé 1 à 3 d'un système de freinage à air comprimé à quatre circuits du véhicule de telle sorte que la pression appliquée à l'entrée de commande pneumatique (7) peut être abaissée en actionnant un frein de service ; et/ou
(b) **que** la valeur de seuil prédéterminée est choisie de telle sorte que la pression appliquée à l'entrée de commande pneumatique (7) peut être abaissée à la valeur de seuil en actionnant un frein de service.

4. Arrangement de frein de stationnement selon l'une des revendications 1 à 3, **caractérisé en ce que** l'entrée de commande pneumatique (7) est connectée pneumatiquement à une ligne d'air comprimé d'alimentation (10) qui relie une vanne de protection à plusieurs circuits d'un système de freinage à air comprimé à plusieurs circuits du véhicule, notamment une vanne de protection à quatre circuits (9), à un raccord servant à l'alimentation en air comprimé (4.1) du premier dispositif à vanne (4).

5. Arrangement de frein de stationnement selon la revendication 4, **caractérisé en ce que** la valeur de seuil prédéterminée est supérieure à une pression de fermeture de la vanne de protection à plusieurs circuits, au-dessous de laquelle un ou plusieurs circuits de frein de service et un circuit du frein d'immobilisation à accumulation (1 ; 2) sont séparés les uns des autres.

6. Arrangement de frein de stationnement selon l'une des revendications précédentes, **caractérisé en ce**
(a) **que** l'entrée de commande électrique (8) est reliée électriquement à une batterie de véhicule à des fins d'alimentation électrique ; ou
(b) **que** l'entrée de commande électrique (8) est reliée électriquement à un circuit de démarrage à des fins d'alimentation électrique.

7. Arrangement de frein de stationnement selon l'une des revendications précédentes, **caractérisé en ce que** le premier dispositif à vanne (4) comprend : un premier raccord (4.1) pour une ligne d'air comprimé d'alimentation destinée à relier le premier dispositif à vanne (4) à une source d'air comprimé, un deuxième raccord (4.2) pour une ligne d'air comprimé, le premier dispositif à vanne (4) étant réalisé pour, à l'état desserré de l'arrangement de frein de stationnement (1 ; 2), charger une ligne d'air comprimé (12) raccordée au deuxième raccord (4.2) avec la pression de la source d'air comprimé et, de manière à serrer l'arrangement de frein de stationnement (1 ; 2), purger l'air de la ligne d'air comprimé (12) raccordée au deuxième raccord (4.2).

8. Arrangement de frein de stationnement selon la revendication 7, **caractérisé en ce**
(a) **que** le deuxième dispositif à vanne est réalisé sous la forme d'une vanne de commande (5) commutable, possédant un premier raccord (5.1) qui est relié pneumatiquement au deuxième raccord (4.2) du premier dispositif à vanne (4), un deuxième raccord (5.2) qui est relié pneumatiquement à l'au moins un cylindre de frein à accumulation (3) et une sortie de purge d'air (5.3) par le biais de laquelle le deuxième raccord (5.2) peut être relié à un collecteur de pression ; ou
(b) **que** le deuxième dispositif à vanne est réalisé sous la forme d'une vanne de commande (5) commutable, possédant un premier raccord (5.1) qui est relié pneumatiquement au deuxième raccord (4.2) du premier dispositif à vanne (4), un deuxième raccord (5.2) qui est relié pneumatiquement à l'au moins un cylindre de frein à accumulation (3) et une sortie de purge d'air (5.3) par le biais de laquelle le premier raccord (5.1) et le deuxième raccord (5.2) peuvent être reliés à un collecteur de pression.

9. Arrangement de frein de stationnement selon la revendication 8, **caractérisé en ce**
(a) **que** la vanne de commande (5) est commutée dans une position de passage dans laquelle le premier raccord (5.1) et le deuxième raccord (5.2) de la vanne de commande (5) sont reliés lorsqu'à l'entrée de commande pneumatique (7) est appliquée une pression pneumatique qui est au moins égale à la valeur de seuil prédéterminée et/ou si un courant électrique est disponible à l'entrée de commande électrique (8) ; et
(b) **que** la vanne de commande (5) est commutée dans une position de purge d'air dans laquelle l'air est purgé du deuxième raccord (5.2) par le biais du raccord de purge d'air (5.3) lorsqu'à l'entrée de commande pneumatique (7) est appliquée une pression pneumatique qui est inférieure à la valeur de seuil prédéterminée et si aucun courant électrique n'est disponible à l'entrée de commande électrique (8) ; ou
**que** la vanne de commande (5) est commutée dans une position de purge d'air dans laquelle l'air est purgé du premier raccord (5.1) et du deuxième raccord (5.2) par le biais du raccord de purge d'air (5.3) lorsqu'à l'entrée de commande pneumatique (7) est appliquée une pression pneumatique qui est inférieure à la valeur de seuil prédéterminée et si aucun courant électrique n'est disponible à l'entrée de commande électrique (8).

10. Arrangement de frein de stationnement selon la revendication 7, **caractérisé en ce que** le deuxième dispositif à vanne
(a) possède une vanne relais (15), laquelle possède une entrée de commande (15.4), une entrée de travail (15.1) reliée au deuxième raccord (4.2) du premier dispositif à vanne (4), une sortie de travail (15.2) reliée à l'au moins un cylindre de frein à accumulation (3) et une sortie de purge d'air (15.3), et
(b) une vanne de commande (25) commutable, laquelle possède un premier raccord (25.1) qui est relié pneumatiquement à une ligne d'air comprimé d'alimentation (10) qui relie une vanne de protection à plusieurs circuits d'un système de freinage à air comprimé à plusieurs circuits du véhicule, notamment une vanne de protection à quatre circuits (9), à un raccord (4.1) servant à l'alimentation en air comprimé du premier dispositif à vanne (4) ; un deuxième raccord (25.2) qui est relié pneumatiquement à l'entrée de commande (15.4) de la vanne relais (15) et comporte une sortie de purge d'air (25.3), le deuxième raccord (25.2) pouvant être relié à un collecteur de pression par le biais de la sortie de purge d'air (25.3) ou le premier raccord (25.1) et le deuxième raccord (25.2) pouvant être reliés à un collecteur de pression par le biais de la sortie de purge d'air (25.3).

11. Arrangement de frein de stationnement selon la revendication 10, **caractérisé en ce**
(a) **que** la vanne de commande (25) est réalisée pour commuter la vanne relais (15) dans une position de passage dans laquelle l'entrée de travail (15.1) est reliée à la sortie de travail (15.2) de la vanne relais (15) lorsqu'à l'entrée de commande pneumatique (7) est appliquée une pression pneumatique qui est au moins égale à la valeur de seuil prédéterminée et/ou si un courant électrique est disponible à l'entrée de commande électrique (8) ; et
(b) **que** la vanne de commande (25) est réalisée pour commuter la vanne relais (15) dans une position de purge d'air dans laquelle l'air est purgé de la sortie de travail (15.2) de la vanne relais (15) par le biais de la sortie de purge d'air (15.3) lorsqu'à l'entrée de commande pneumatique (7) de la vanne de commande (25) est appliquée une pression pneumatique qui est inférieure à la valeur de seuil prédéterminée et si aucun courant électrique n'est disponible à l'entrée de commande électrique (8).

12. Arrangement de frein de stationnement selon l'une des revendications 8 à 11, **caractérisé en ce**
(a) **que** la vanne de commande (5 ; 25) est un distributeur 3/2 ; et/ou
(b) **que** la vanne de commande (5 ; 25) est une vanne avec rappel par ressort.

13. Arrangement de frein de stationnement selon l'une des revendications précédentes, **caractérisé en ce que** le deuxième dispositif à vanne, notamment la vanne de commande, est réalisé pour effectuer la purge d'air de l'au moins un cylindre de frein à accumulation avec étranglement.

14. Arrangement de frein de stationnement selon la revendication 13, lorsqu'il est dépendant de la revendication 2, **caractérisé en ce que** l'étranglement est conçu de telle sorte qu'en présence d'un moteur de véhicule qui tourne encore à un instant de purge d'air du deuxième dispositif à vanne, un compresseur d'air réapprovisionne l'alimentation en air comprimé avec suffisamment d'air comprimé pour compenser la perte par le biais de la purge d'air avec étranglement.

15. Arrangement de frein de stationnement selon l'une des revendications 7 à 14, **caractérisé en ce**
(a) **que** la sortie de purge d'air du deuxième dispositif à vanne est configurée avec étranglement ; et/ou
(b) **que** la sortie de purge d'air du deuxième dispositif à vanne est reliée à une vanne d'étranglement.

16. Véhicule utilitaire équipé d'un arrangement de frein de stationnement selon l'une des revendications précédentes.
